# EUROPEAN PATENT SPECIFICATION

(11) **EP 1 895 042 B1**
(45) Date of publication and mention of the grant of the patent: **17.08.2016**
(21) Application number: 07251495.3
(22) Date of filing: 04.04.2007
(51) Int. Cl.: D06F 57/08, D06F 58/16, A47K 10/06

(54) **Joint device and a foldable clothes warmer with such a joint device**
Gelenkvorrichtung und faltbarer Kleiderwärmer damit
Dispositif d'articulation et dispositif pliable chauffeur de vêtements avec un tel dispositif

(30) Priority: 01.09.2006 HK 06109778
(43) Date of publication of application: 05.03.2008
(73) Proprietor: Sincere International Trading Co. Ltd., Fotan, Shatin Hong Kong (CN)
(72) Inventor: Lam, Wing Yiu c/o Sincere International Trading Co., Ltd., Fotan, Shatin Hong Kong (HK)
(74) Representative: Hammler, Martin Franz

(56) References cited:
- EP-A2- 1 211 472
- DE-U1- 7 737 877
- GB-A- 795 463
- GB-A- 2 115 277
- US-A- 2 494 861
- US-A- 2 769 248
- US-A- 4 864 523
- US-A- 5 566 838

## Description

### FIELD OF THE INVENTION

The present invention relates to the field of clothes warmers for warming clothes, bed linen, bathroom apparel and the like. More particularly, the present invention relates to a joint member that can be used in a collapsible clothes warmer for warming clothes etc, as well as a clothes warmer incorporating such a joint.

### BACKGROUND OF THE INVENTION

Stands or racks for the heating or warming of clothes, bed linen and/or for example, towels or other bathroom apparel, are often used to preheat or warm such articles prior to being worn or used by a user. In countries having a relatively cold ambient temperature during the winter months, for example northern European countries, such racks are often also used to remove small amounts of moisture accumulated in clothes whilst pre-heating the clothing which mitigates the impact of temperature differential between the clothes and the user upon the user dressing in the clothes. US4864523 (which forms the basis for the pre-characterizing portion of claim 1) concerns a laptop computer having a base housing, a display housing rotatable from a closed to an open position, and a cable guide duct through which a cable is introduced from the base housing into the display housing. US2769248 concerns collapsible and portable clothes drying apparatus, having pivotally mounted electric heating elements. US2494861, GB2115277 and GB795463 show collapsible electrically heated clothes airers/driers. US5566838 relates to an electrically heated shoe rack. EP1211472 concerns a domestic heating water-filled or electrically heated towel radiator with linen supporting members that can be rotated from a vertical to a horizontal position. DE7737877U1 relates to unheated clothes airing frames which can be folded together for storage.

Such devices as those described above are typically powered by mains power and heating elements are placed at or adjacent rack-like portions which hold the clothes, the heating elements warming the clothes either via convection or conduction. Due to the relatively close exposure of the heating elements to a user, such devices should comply with CE marking and GS mark, in particular when used in European countries. With the exception of some higher risk products, most products can be self-declared to meet the essential requirements by a manufacturer. While the use of a CE marking permits a product's access to the European Union, it is not an approval certification, and a CE marking is only a declaration of the supplier's own responsibility. Thus, while allowing products to be placed on the European market, such marking allows for the free movement of goods and permits the withdrawal of non-conforming or offending products.

It is an object of the present invention to provide a clothes etc. warmer and a joint device which overcome or substantially alleviates at least some of the deficiencies exhibited by those of the prior art.

### SUMMARY OF THE INVENTION

In a broad general aspect, the present invention provides a joint device as defined in claim 1. Advantageously, upon pivoting movement of the arm members about the central portion, the central portion maintains the conductors in a spaced apart relationship in a manner such that the structural integrity of said conductors is maintained for a predetermined minimum number of hinged movement cycles of said arm members.

The predetermined number of hinged movement cycles is preferably that which is necessary to satisfy regulatory approval standards for electrical components. Preferably, the central portion is adapted to provide a pivot axis and said electrical conductors are received axially by the central portion and are distributed radially outwardly to each of said arm members. The electrical conductors are preferably received in an axial bore within said central portion and said central portion includes a separation portion for maintaining the electrical conductors spaced apart from each other.

In one embodiment, the joint device comprises: a first boss member having a passage extending therethrough, said first boss member being fixed relative to the first arm member; a second boss member having a passage extending therethrough, the passage of the first boss member being coaxially aligned with that of the second boss member, said second boss member being fixed relative to the second arm member; a pivot member including a spigot portion adapted to extend at least partly through the passages of the boss members to allow relative hinged movement between the first arm member and the second arm member; the pivot member comprising a passage for receiving a first electrical conductor for delivery of electrical power to the first arm member and for receiving a second electrical conductor for delivery of electrical power to the second arm member; the pivot member further comprising a separation portion for maintaining the first electrical conductor and the second electrical conductor in a spaced apart relationship upon relative hinged movement between the first arm member and the second arm member.

In some embodiments, the present invention provides a foldable frame for warming of clothes, bed linen, bathroom apparel or the like, said frame comprising a first arm assembly including a pair generally elongate first arm members supporting a plurality of elongate clothes etc. hanging members; a second arm assembly including a pair generally elongate second arm members supporting a plurality of elongate clothes etc. hanging members; a joint device as specified above disposed between adjacent ends of at least one of the first and at least one of the second arm members in a manner so as to provide relative hinged movement between the first arm assembly and the second arm assembly and for delivery of electrical power to the first arm assembly via the adjacent first arm member for supplying power to a heating element associated with the first arm assembly, and for delivery of electrical power to the second arm assembly via the adjacent second arm member for supplying power to a heating element associated with the second arm assembly.

In one embodiment, the first arm assembly and the second arm assembly are preferably independently moveable relative to each other from a non-erect configuration whereby the arm assemblies extend from the joint devices in a downward direction to an erect configuration whereby the arm assemblies extend in generally horizontal plane.

The foldable frame may be provided in combination with a support stand for supporting the foldable frame at the first joint member to allow independent movement of the first arm assembly and the second arm assembly.

In an embodiment, the support stand preferably comprises a first pair of vertical support members, one of which is engaged with the first joint member; an upper bracing member and a lower bracing member each extending above and below the foldable frame respectively and between the first pair of vertical support members; a second pair of vertical support members spaced apart so as to allow free relative hinged movement between the first arm assembly and the second arm assembly from a lowered position to an erect horizontal position; and upper and lower tie members extending from the upper and lower ends of the second pair of vertical support members and hingedly engaged with the upper and lower bracing members respectively so as to allow the second pair of vertical support members to be moved adjacent the first pair of vertical support members when the foldable frame is a the lowered position.

Preferably the foldable frame and support stand assembly further comprises a releasable engagement mechanism for engaging the first and second arm assemblies with the second pair of vertical support members.

The first electrical conductor and the second electrical conductor preferably extend through at least one of the first pair of vertical support members.

The pivot member preferably further includes a mounting portion for engagement with a support stand. The passage of the pivot member preferably extends through the mounting portion.

The first boss member and the second boss member preferably have generally circular passages, and the spigot portion of the pivot member is generally circular in cross-section. Preferably the first boss member and the second boss member each have radially disposed apertures therein for passage of the first and second electrical conductors to the first and second arm members respectively. The separation portion of the pivot member is preferably provided as a web formation extending at least partly axially in the pivot member passage.

The first boss member, the second boss member and the pivot member are preferably formed from a material having electrical insulating properties. More preferably the first boss member, the second boss member and the pivot member are formed from a polymeric material.

### BRIEF DESCRIPTION OF THE DRAWINGS

The invention now will be described, by way of example only, and with reference to the accompanying drawings in which:
Figure 1a shows a first perspective view of a central pivot member of a joint device embodying the present invention;
Figure 1b shows a second perspective view of the central pivot member as depicted in Figure 1a;
Figure 1c shows a perspective view of a first boss member and first arm member of the joint device engaged with the central pivot member as depicted in Figure 1a and Figure 1b;
Figure 1d shows a second boss member and second arm member engaged with the first boss member and the central pivot member as depicted in Figure 1c;
Figure 2a shows a foldable frame comprising a joint member embodying the present invention, in a fully folded configuration;
Figure 2b shows the foldable frame as depicted in Figure 2a in a part erect configuration;
Figure 2c shows the foldable frame as depicted in Figure 2a and Figure 2b in a fully erect state;
Figure 3a shows a perspective view of a central pivot member of a joint device embodying the present invention;
Figure 3b shows a perspective view of the central pivot member as depicted in Figure 3a including a pair of electrical power conductors;
Figure 3c shows a further view of the central pivot member as depicted in Figure 2b;
Figure 3d shows a first boss member and a second boss member of a joint device embodying the present invention and their respective first and second arm members;
Figure 3e shows the bosses and arm members depicted in Figure 3b engaged with the central pivot member as depicted in Figure 3a;
Figure 3f shows an enlarged view of the joint device as depicted in Figure 3e in a first configuration with a first electrical power conductor extending therethrough;
Figure 3g shows the joint device as depicted in Figure 3f in a second configuration;
Figure 4a shows a foldable frame with a joint member embodying the present invention, in combination with a support stand, in a closed configuration;
Figure 4b shows the foldable frame and support stand as depicted in Figure 4a in a partially erected configuration;
Figure 4c shows the foldable frame and support stand of Figure 4a and Figure 4b in a fully erected configuration;
Figure 5a shows a further embodiment of a foldable frame and support stand in a closed configuration;
Figure 5b shows the foldable frame and support stand as depicted in Figure 5a in partially erected configuration;
Figure 5c shows the foldable frame and support stand as depicted in Figure 5a and Figure 5b in a fully erected configuration;
Figure 6a shows an exemplary embodiment of a foldable frame and support stand according to the present invention having one foldable frame;
Figure 6b shows another exemplary embodiment of a foldable frame and support stand according to the present invention having two foldable frames; and
Figure 6c shows a further exemplary embodiment of a foldable frame and support stand according to the present invention having three foldable frames.

### DETAILED DESCRIPTION OF THE INVENTION

The following description refers to preferred embodiments of a joint according to the present invention and foldable clothes etc. warmer incorporating such a joint. To facilitate an understanding of the invention, reference is made in the description to the accompanying drawings whereby the joint and clothes etc. warmer are illustrated in preferred embodiments. Similar components between the embodiments are identified by the same reference numerals.

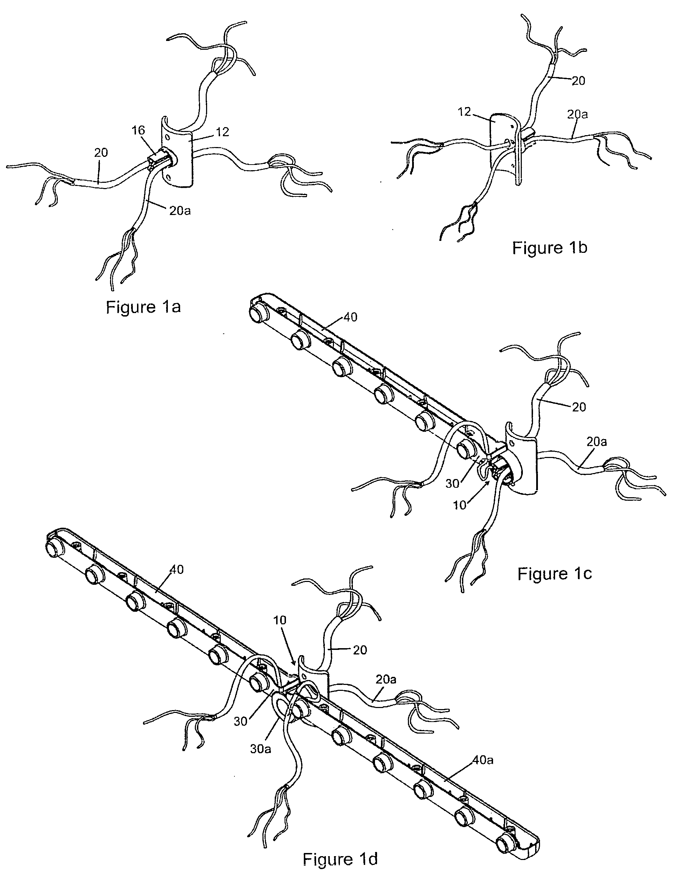

Referring to Figures 1a, 1b, 1c and 1d, there is shown a joint device 10 for providing hinged movement between a first 40 and a second 40a arm member, and providing independent delivery of electrical power to the arm members 40, 40a via electrical power conductors shown as cables 20, 20a. The joint device 10 includes a first boss member 30, which is formed integrally with the first arm member 40 in the present embodiment, and a second boss member 30a, again which is formed integrally in the present embodiment with the second arm member 40a. A central pivot member 12 is provided which includes a spigot portion 16 which is adapted to extend through passages of the bosses 30, 30a so as to provide a pin joint and allow hinged motion between arm member 40 and arm member 40a.

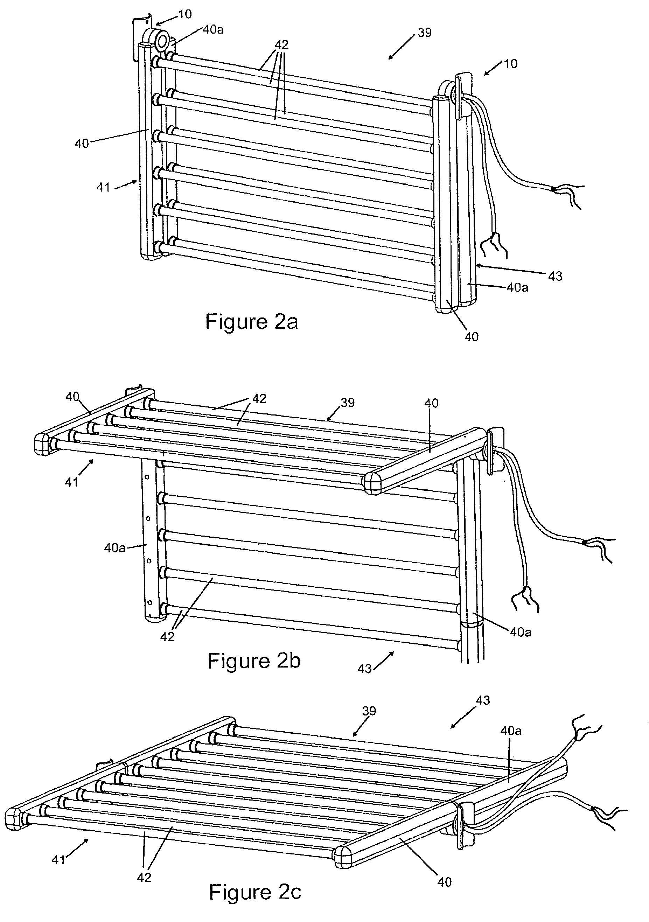

Referring Figures 2a, 2b and 2c, there is shown a foldable frame for warming clothes etc. incorporating a joint device embodying the present invention. The foldable frame 39 includes a first arm assembly 41 which includes a pair of the generally elongate first arm members 40 being maintained in a parallel spaced part relationship by a plurality of elongate clothes hanging members 42 extending therebetween. A second arm assembly 43 is also provided which also includes a pair of the generally elongate second arm members 40a also being maintained in a parallel spaced part relationship by a plurality of clothes hanging members 42 extending therebetween. Between the first arm assembly 41 and second arm assembly 43, a first joint device 10 and a second joint device 10 are disposed between adjacent ends of the first 40 and second 40a arm members respectively in a manner so as to provide a relatively hinged movement between the first arm assembly 41 and the second arm assembly 43. In the present embodiment, one joint device is that as described with reference to Figures 1a-1d for providing electrical power to the plurality of elongate clothes hanging members 42 on which clothes etc. are placed so as to effect heating or warming of the clothes.

As shown in Figure 2a, the foldable frame 39 is in a collapsed configuration whereby the first arm assembly 41 and the second arm assembly 43 are generally parallel to each other. The foldable frame 39 may be extended as shown in Figure 2b such that the first arm assembly 41 is hinged relative to the second arm assembly to a horizontal state, whilst the spigot portion of the first joint device 10 is maintained in the same rotational relationship. Further, as shown in Figure 2c, the second arm assembly 43 may also be hinged relative to the first arm assembly whilst the spigot portion 16 of the joint device 10 is again maintained in the same rotational relationship.

As will be appreciated by those skilled in the art, it is necessary that the power conductors 20 and 20a do not interfere with each other and are not exposed to fatigue which may ultimately rupture the power conductors and lead to safety concerns and electric shock hazard to a user. The present invention provides a joint device 10 which allows the hinged movement between the two arms or arm assemblies whilst providing for installation and maintaining integrity of the electrical power conductors 20, 20a which provide power to heating elements which are disposed at or adjacent the elongate clothes hanging members 42. The joint device 10 of the present invention is adapted to allow for multiple independent movements by the arm assemblies without the integrity of the electric power conductors being compromised. Thus, an expandable foldable frame for warming clothes may be provided which allows the advantage of rapid folding and storage when not in use.

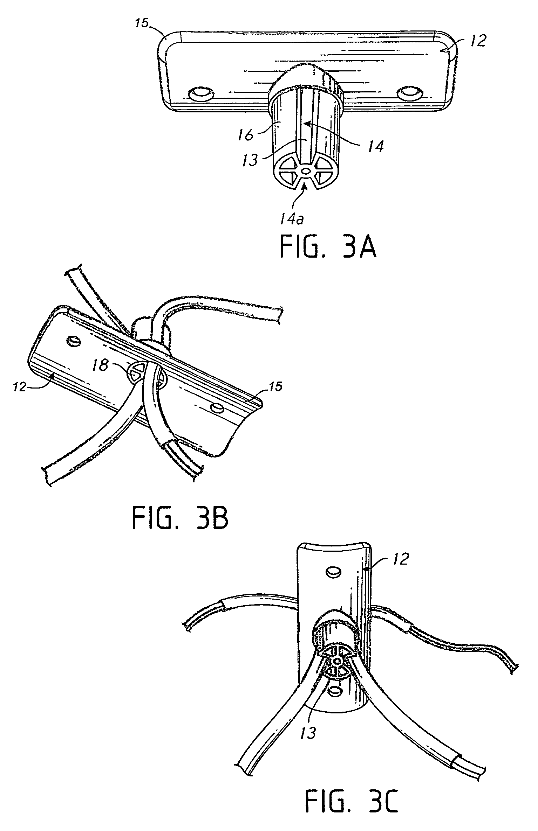

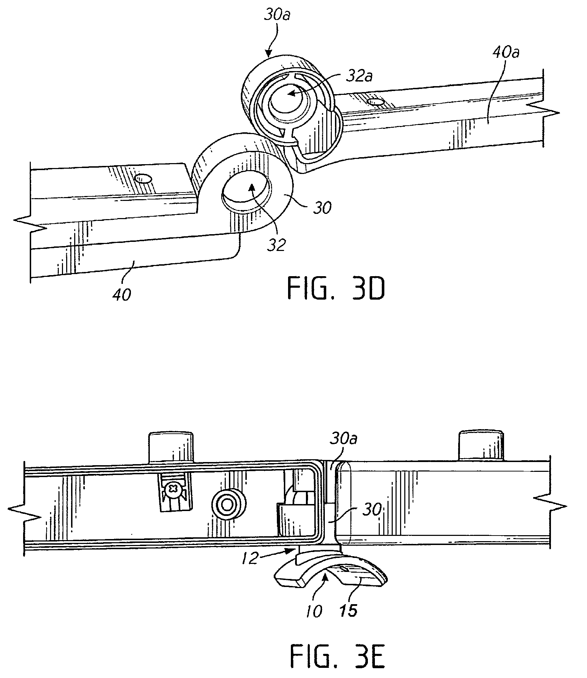

Referring to Figures 3a, 3b and 3c, a detailed view of the central pivot member 12 of the joint device 10 according to the present invention is shown. The central pivot member 12 includes a mounting portion or plate 15 and a spigot portion 16 extending from the mounting plate 15 which acts as a pin joint when disposed within the passages 32, 32a (Figure 3d) of the first and second boss members 30, 30a. As such, the first arm member 40 and the second arm member 40a are provided with hinged relative motion. The central pivot member 12 has a central passage 14, 14a for receiving electrical power conductors 20, 20a, and a separation portion 13 which maintains the first electric conductor 20 and the second electric conductor 20a in a spaced part relationship upon relative hinged movement between the first arm member 40 and the second arm member 40a. The passage 14, 14a passes through the mounting portion 15 and axially along the spigot portion 16.

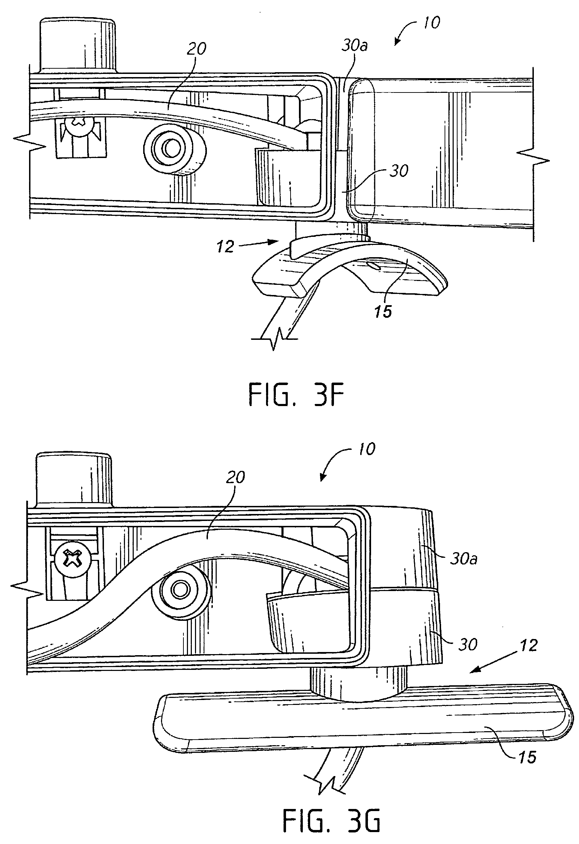

Referring to Figures 3f and 3g, the first boss member 30 and the second boss member 30a each have radially disposed apertures for passage of the first and second electrical conductors 20, 20a from the central passage of the central pivot member 12 to the first and second arm members 40, 40a respectively. As will be appreciated by those skilled in the art, electrical communication can be provided by the present invention to both the first arm member 40 and the second arm member 40a throughout hinged movement of the arm members without interference of the electrical conductors 20, 20a with each other and without excessive movement or twisting of the electrical conductors 20, 20a so as to provide good endurance and fatigue life of the conductors thus providing a safe manner in which to transfer electrical power ultimately from the conductors to the heating elements disposed in or adjacent the elongate hanging members 42.

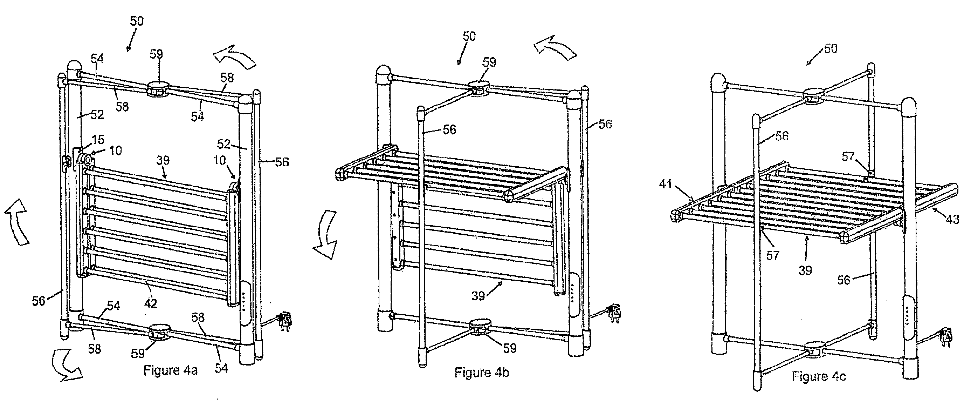

Referring to Figures 4a, 4b and 4c, there is an exemplary embodiment of an assembly 50 for warming clothes incorporating foldable frames with joint members according to an embodiment of the present invention. As shown, the assembly 50 includes a foldable frame 39 similar to or the same as depicted with reference to Figures 2a, 2b and 2c, and a support stand for supporting the foldable frame 39. Similarly as described with the erecting and folding process with reference to Figures 2a, 2b and 2c, the foldable assembly 50 also provides for foldable and storable configuration of the support stand when the foldable frame 39 is in a non-erect state. As will be appreciated, this allows for ease of storage of the assembly 50 when not in use. The support stand comprises a first pair of vertical support members 52, one of which is connected to the first joint device 10 via its mounting plate 15, and the other of which is similarly connected to the second joint device 10 of the foldable frame 39. Upper and lower bracing members 54 interconnect the vertical support members 52 above and below the foldable frame 39. A second pair of vertical support members 56 is spaced apart so as to allow free relative hinged movement between the first arm assembly 41 and second arm assembly 43 of the foldable frame 39. Upper and lower tie members 58 extend from upper and lower ends of the second pair of vertical support members 56 and are hingedly engaged with the upper and lower bracing members 54 respectively, by means of centrally positioned connector bodies 59. The tie members 58 may be provided in two separate halves, each independently pivotable in a horizontal plane with respect to its connector body 59, so that the two vertical support members 56 of the second pair may each be moved independently between folded and erected positions (see Figure 4b). A releasable engagement mechanism 57 is provided for engaging the first and second arm assemblies 41, 43, with their respective second pair vertical support members 56, to secure all of these components in their erected positions.

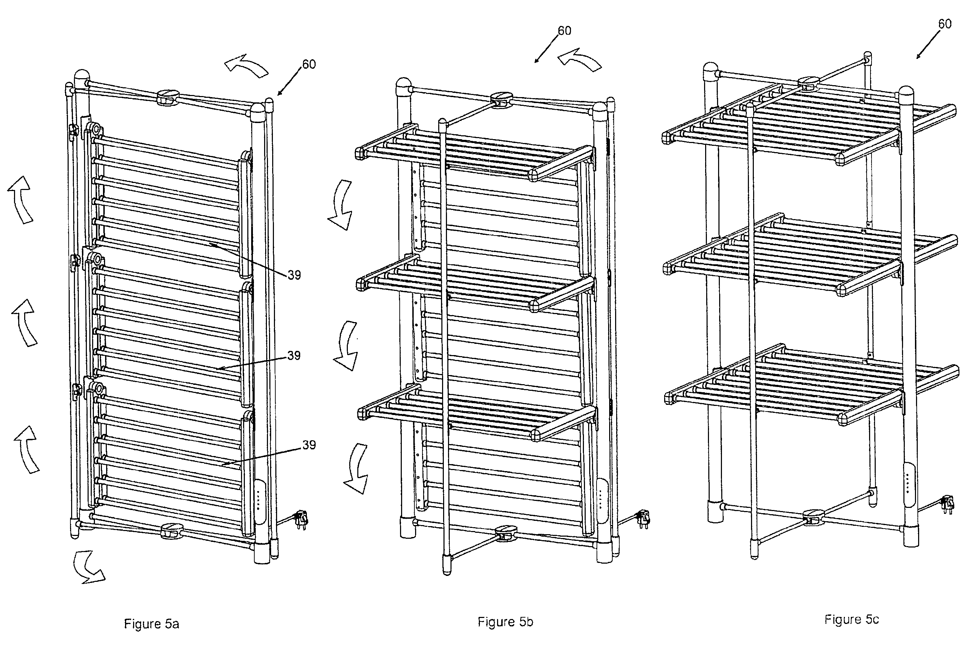

As shown in Figures 5a, 5b and 5c, similarly as depicted with reference to Figures 4a, 4b and 4c, a foldable assembly 60 is shown. However in the present embodiment, three foldable frames 39 are used for providing increased area of warming or heating of clothes etc. Again, as will be appreciated, the foldable assembly 60 is readily erectable and foldable so as to allow for generally planar or collapsed configuration and ease of storage. The assembly 60 includes a foldable support stand that is similar to that shown in Figures 4a - 4b. The sole significant difference is the provision of three foldable frames 39 instead of one; each foldable frame having its own joint devices 10 and engagement mechanisms 57 co-operating with the foldable support stand.

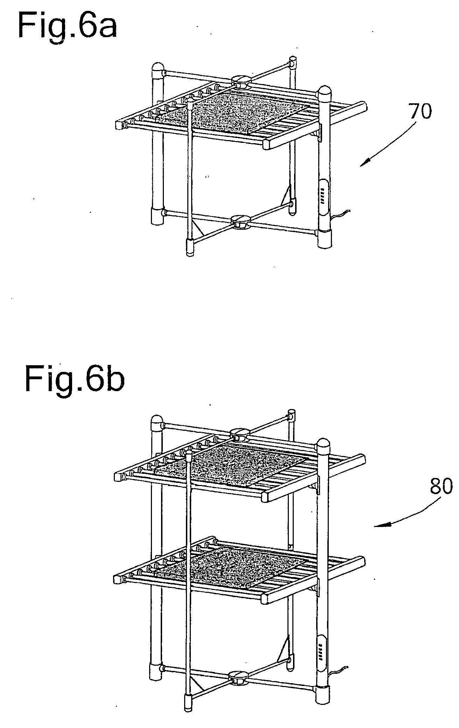

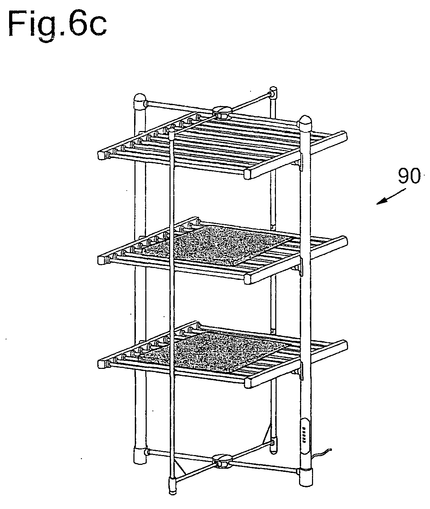

Now referring to Figures 6a, 6b and 6c, exemplary embodiments of foldable assemblies 70, 80 and 90 as shown, whereby a one-tier, two-tier and three-tier assembly is implemented respectively. As will be appreciated by those skilled in the art, electrical connection and wiring may be effected within the support stand and foldable frame(s) so as to provide power for heating to each of the foldable frames depending on the number provided and the particular configuration. Further, as will also be appreciated by those skilled in the art, by providing a device as depicted and shown in the illustrated embodiments, heating of clothes etc. may be effected safely and efficiently by a foldable frame assembly which allows ease of storage whilst still maintaining safety to a user due to the joint device as provided by the present invention. Thus, an effective heating or warming frame may be provided without compromising the safety of a user of such a device.

It will be appreciated that the above described embodiments may take alternate forms and include additional features, within the scope of the invention as defined in the claims.

## Claims

1. A joint device (10) for providing hinged movement between a first arm member (40) and a second arm member (40a) and for providing independent delivery of electrical power to the first and second arm members (40, 40a), the joint device (10) including a central pivot member (12) for receiving at least two sets of continuous electrical power conductors (20, 20a) and for delivering at least one set of said continuous electrical power conductors to each of said first and second arm members,
**characterised in that** the joint device further comprises a first boss member (30) from which the first arm member extends and a second boss member (30a) from which the second arm member extends, wherein the first boss member and the second boss member each comprise a passage (32, 32a) and wherein the central pivot member (12) comprises a mounting portion (15) and a spigot portion (16) extending from the mounting portion and disposed within the passages (32, 32a) of the bosses (30, 30a) to act as a pin joint allowing hinged movement between the first arm member (40) and the second arm member (40a), and wherein the first boss member (30) comprises a radially disposed aperture for passage of a set of continuous electrical power conductors (20) from the central pivot member (12) to the first arm member (40) and the second boss member (30a) comprises a radially disposed aperture for passage of a set of continuous electrical power conductors (20a) from the central pivot member (12) to the second arm member (40a).

2. A joint device (10) according to claim 1, wherein the central pivot member (12) comprises a passage (14, 14a) for receiving said at least two sets of continuous electrical power conductors (20, 20a) and the central pivot member (12) includes a separation portion (13) for maintaining the two sets of continuous electrical power conductors spaced apart from each other.

3. A joint device (10) according to claim 2, wherein the separation portion (13) of the central pivot member (12) is provided as a web formation.

4. A joint device (10) as claimed in any preceding claim, wherein the first boss member (30) is fixed relative to the first aim member (40);
the passage (32, 32a) of the first boss member is coaxially aligned with that of the second boss member, and the second boss member (30a) is fixed relative to the second arm member (40a).

5. A joint device (10) according to any preceding claim, wherein the mounting portion (15) is adapted for for engagement with a support stand (52, 54, 56, 58).

6. A joint device (10) according to claim 5, wherein the passage (14, 14a) of the central pivot member (12) extends through the mounting portion (15).

7. A joint device (10) according to any preceding claim, wherein the passages (32, 32a) of the first and second boss members (30, 30a) are generally circular and the spigot portion (16) is generally circular in cross-section.

8. A joint device (10) according to any preceding claim, wherein the first boss member (30), the second boss member (30a) and the central pivot member (12) are formed from a material having electrical insulating properties.

9. A joint device (10) according to any of claims 1 - 7, wherein the first boss member (30), the second boss member (30a) and the central pivot member (12) are formed from a polymeric material.

10. A joint device (10) as claimed in any preceding claim, wherein the first boss member (30) is formed integrally with the first arm member (40) and the second boss member (30a) is formed integrally with the second arm member (40a).

11. A foldable frame (39) for warming of clothes, bed linen, bathroom apparel or the like, said frame comprising:
a first arm assembly (41) including a pair generally elongate first arm members (40) supporting a plurality of elongate clothes etc. hanging members (42);
a second arm assembly (43) including a pair generally elongate second arm members (40a) supporting a plurality of elongate clothes etc. hanging members (42);
a joint device (10) as defined in any one of claims 1 - 10 disposed between adjacent ends of at least one of the first (40) and at least one of the second (40a) arm members in a manner so as to provide relative hinged movement between the first arm assembly (41) and the second arm assembly (43) and for delivery of electrical power to the first arm assembly via the adjacent first arm member for supplying power to a heating element associated with the first arm assembly, and for delivery of electrical power to the second arm assembly via the adjacent second arm member for supplying power to a heating element associated with the second arm assembly.

12. A foldable frame (39) according to claim 11, wherein the first arm assembly (41) and the second arm assembly (43) are independently moveable relative to each other from a non-erect configuration whereby the arm assemblies extend from the joint devices (10) in a downward direction to an erect configuration whereby the arm assemblies extend in a generally horizontal plane.

13. A foldable frame (39) according to claim 11 or 12, comprising in combination therewith a support stand (52, 54, 56, 58) for supporting said foldable frame at the first joint member (10) to allow independent movement of the first arm assembly (41) and the second arm assembly (43).

14. A foldable frame and support stand according to claim 13, wherein the support stand comprises:
a first pair of vertical support members (52), one of which is engaged with the first joint member (10);
an upper bracing member (54) and a lower bracing member (54) each extending above and below the foldable frame (39) respectively and between the first pair of vertical support members (52);
a second pair of vertical support members (56) spaced apart so as to allow free relative hinged movement between the first arm assembly (41) and the second arm assembly (43) from a lowered position to an erect horizontal position; and
upper and lower tie members (58) extending from the upper and lower ends of the second pair of vertical support members and hingedly engaged with the upper and lower bracing members respectively so as to allow the second pair of vertical support members to be moved adjacent the first pair of vertical support members when the at least one foldable frame is a the lowered position.

15. A foldable frame and support stand according to claim 14, further comprising a releasable engagement mechanism (57) for engaging the first and second arm assemblies (41, 43) with the second pair of vertical support members (56).

16. A foldable frame and support stand according to claim 14 or claim 15, wherein the first electrical conductor (20) and the second electrical conductor (20a) extend through at least one of the first pair of vertical support members (52).

## Patentansprüche

1. Gelenkvorrichtung (10) zum Bereitstellen einer Scharnierbewegung zwischen einem ersten Armbauteil (40) und einem zweiten Armbauteil (40a) und zum Bereitstellen einer unabhängigen Lieferung von elektrischem Strom an das erste und zweite Armbauteil (40, 40a), wobei die Gelenkvorrichtung (10) ein Mittelschwenkbauteil (12) zum Aufnehmen zumindest zweier Sätze fortlaufender elektrischer Stromleiter (20, 20a) und zum Liefern zumindest eines Satzes der fortlaufenden elektrischen Stromleiter an sowohl das erste als auch zweite Armbauteil enthält,
**dadurch gekennzeichnet, dass** die Gelenkvorrichtung des Weiteren ein erstes Knopfbauteil (30), von welchem sich das erste Armbauteil erstreckt, und ein zweites Knopfbauteil (30a), von welchem sich das zweite Armbauteil erstreckt, aufweist, wobei das erste Knopfbauteil und das zweite Knopfbauteil jeweils einen Durchlass (32, 32a) aufweisen und wobei das Mittelschwenkbauteil (12) einen Montageabschnitt (15) und einen Zapfenabschnitt (16) aufweist, welcher sich vom Montageabschnitt erstreckt und innerhalb der Durchlässe (32, 32a) der Knöpfe (30, 30a) angeordnet ist, um als ein Stiftgelenk zu agieren, das eine Scharnierbewegung zwischen dem ersten Armbauteil (40) und dem zweiten Armbauteil (40a) ermöglicht, und
wobei das erste Knopfbauteil (30) eine sternförmig angeordnete Öffnung für einen Durchlass eines Satzes fortlaufender elektrischer Stromleiter (20) vom Mittelschwenkbauteil (12) zum ersten Armbauteil (40) aufweist und das zweite Knopfbauteil (30a) eine sternförmig angeordnete Öffnung für einen Durchlass eines Satzes fortlaufender elektrischer Stromleiter (20a) vom Mittelschwenkbauteil (12) zum zweiten Armbauteil (40a) aufweist.

2. Gelenkvorrichtung (10) nach Anspruch 1, wobei das Mittelschwenkbauteil (12) einen Durchlass (14, 14a) zum Aufnehmen der zumindest zwei Sätze fortlaufender elektrischer Stromleiter (20, 20a) aufweist und der Mittelschwenkabschnitt (12) einen Trennwandabschnitt (13) enthält, um die zwei Sätze fortlaufender elektrischer Stromleiter voneinander getrennt zu halten.

3. Gelenkvorrichtung (10) nach Anspruch 2, wobei der Trennwandabschnitt (13) des Mittelschwenkbauteils (12) als ein Steggebilde bereitgestellt ist.

4. Gelenkvorrichtung (10) nach einem vorangehenden Anspruch, wobei das erste Knopfbauteil (30) relativ zum ersten Armbauteil (40) befestigt ist;
der Durchlass (32, 32a) des ersten Knopfbauteils gleichachsig mit jenem des zweiten Knopfbauteils ausgerichtet ist und das zweite Knopfbauteil (30a) relativ zum zweiten Armbauteil (40a) befestigt ist.

5. Gelenkvorrichtung (10) nach einem vorangehenden Anspruch, wobei der Montageabschnitt (15) zur Verbindung mit einem Ständer (52, 54, 56, 58) angepasst ist.

6. Gelenkvorrichtung (10) nach Anspruch 5, wobei sich der Durchlass (14, 14a) des Mittelschwenkbauteils (12) durch den Montageabschnitt (15) erstreckt.

7. Gelenkvorrichtung (10) nach einem vorangehenden Anspruch, wobei die Durchlässe (32, 32a) des ersten und zweiten Knopfbauteils (30, 30a) im Allgemeinen rund sind und der Zapfenabschnitt (16) im Allgemeinen einen kreisförmigen Querschnitt aufweist.

8. Gelenkvorrichtung (10) nach einem vorangehenden Anspruch, wobei das erste Knopfbauteil (30), das zweite Knopfbauteil (30a) und der Mittelschwenkabschnitt (12) aus einem Material mit elektrisch isolierenden Eigenschaften gebildet sind.

9. Gelenkvorrichtung (10) nach einem der Ansprüche 1 - 7, wobei das erste Knopfbauteil (30), das zweite Knopfbauteil (30a) und das Mittelschwenkbauteil (12) aus einem Polymermaterial gebildet sind.

10. Gelenkvorrichtung (10) nach einem vorangehenden Anspruch, wobei das erste Knopfbauteil (30) einstückig mit dem ersten Armbauteil (40) gebildet ist und das zweite Knopfbauteil (30a) einstückig mit dem zweiten Armbauteil (40a) gebildet ist.

11. Faltbarer Rahmen (39) zum Wärmen von Kleidung, Bettlaken, Bademänteln oder dergleichen, der Rahmen aufweisend:
eine erste Armanordnung (41), welche ein Paar von im Allgemeinen länglichen ersten Armbauteilen (40) enthält, die mehrere längliche Hängebauteile (42) für Kleidungsstücke usw. stützen;
eine zweite Armanordnung (43), welche ein Paar von im Allgemeinen länglichen zweiten Armbauteilen (40a) enthält, die mehrere längliche Hängebauteile (42) für Kleidungsstücke usw. stützen;
eine Gelenkvorrichtung (10) nach einem der Ansprüche 1 - 10, die zwischen angrenzenden Enden von zumindest einem der ersten (40) und zumindest einem der zweiten (40a) Armbauteile auf eine Weise angeordnet ist, dass eine relative Scharnierbewegung zwischen der ersten Armanordnung (41) und der zweiten Armanordnung (43) bereitgestellt ist, und zur Lieferung elektrischen Stroms an die erste Armanordnung über das angrenzende erste Armbauteil zum Versorgen eines Heizelements mit Strom, welches mit der ersten Armanordnung verknüpft ist, und zur Lieferung von elektrischem Strom an die zweite Armanordnung über das angrenzende zweite Armbauteil, zum Versorgen eines Heizelements mit Strom, welches mit der zweiten Armanordnung verknüpft ist.

12. Faltbarer Rahmen (39) nach Anspruch 11, wobei die erste Armanordnung (41) und die zweite Armanordnung (43) unabhängig relativ zueinander aus einer nicht aufgestellten Konfiguration, wo die Armanordnungen sich von den Gelenkvorrichtungen (10) in eine nach unten gerichtete Richtung erstrecken, in eine aufgestellte Konfiguration, wo die Armanordnungen sich in einer im Allgemeinen horizontalen Ebene erstrecken, beweglich sind.

13. Faltbarer Rahmen (39) nach Anspruch 11 oder 12, aufweisend in Kombination damit einen Ständer (52, 54, 56, 58) zum Stützen des faltbaren Rahmens am ersten Gelenkbauteil (10), um unabhängige Bewegung der ersten Armanordnung (41) und der zweiten Armanordnung (43) zu ermöglichen.

14. Faltbarer Rahmen und Ständer nach Anspruch 13, wobei der Ständer aufweist:
ein erstes Paar von Stützbauteilen (52), von welchen eines mit dem ersten Gelenkbauteil (10) in Eingriff steht;
ein oberes Absteifungsbauteil (54) und ein unteres Absteifungsbauteil (54), die sich jeweils über beziehungsweise unter den faltbaren Rahmen (39) und zwischen dem ersten Paar von vertikalen Stützbauteilen (52) erstrecken;
ein zweites Paar von vertikalen Stützbauteilen (56), das beabstandet ist, um eine freie relative Scharnierbewegung zwischen der ersten Armanordnung (41) und der zweiten Armanordnung (43) aus einer abgesenkten Position in eine aufgerichtete horizontale Position zu ermöglichen; und
obere und untere Haltebauteile (58), welche sich vom den oberen und unteren Ende des zweiten Paares vertikaler Stützbauteile erstrecken und scharnierartig mit dem oberen beziehungsweise unteren Absteifungsbauteil verbunden sind, um dem zweiten Paar von vertikalen Stützbauteilen zu ermöglichen, angrenzend an das erste Paar von vertikalen Stützbauteilen bewegt zu werden, wenn der zumindest eine, faltbare Rahmen in der abgesenkten Position ist.

15. Faltbarer Rahmen und Ständer nach Anspruch 14, des Weiteren aufweisend einen lösbaren Eingriffsmechanismus (57) für einen Eingriff der ersten und zweiten Armanordnung (41, 43) mit dem zweiten Paar vertikaler Stützbauteile (56).

16. Faltbarer Rahmen und Ständer nach Anspruch 14 oder Anspruch 15, wobei sich der erste elektrische Leiter (20) und der zweite elektrische Leiter (20a) durch zumindest eines des ersten Paares vertikaler Stützbauteile (52) erstrecken.

## Revendications

1. Dispositif d'articulation (10) pour fournir un mouvement articulé entre un premier organe de bras (40) et un deuxième organe de bras (40a) et pour fournir une alimentation indépendante en puissance électrique au premier et au deuxième organe de bras (40, 40a), le dispositif d'articulation (10) comportant un organe de pivot central (12) pour recevoir au moins deux ensembles de conducteurs de puissance électrique continus (20, 20a) et pour fournir au moins un ensemble desdits conducteurs de puissance électrique continus à chacun desdits premier et deuxième organes de bras,
**caractérisé en ce que** le dispositif d'articulation comprend en outre un premier organe de bossage (30) depuis lequel s'étend le premier organe de bras et un deuxième organe de bossage (30a) depuis lequel s'étend le deuxième organe de bras, le premier organe de bossage et le deuxième organe de bossage comprenant chacun un passage (32, 32a) et l'organe de pivot central (12) comprenant une portion de montage (15) et une portion de tourillon (16) s'étendant depuis la portion de montage et disposée à l'intérieur des passages (32, 32a) des bossages (30, 30a) de manière à agir en tant qu'articulation à goupille, permettant un mouvement articulé entre le premier organe de bras (40) et le deuxième organe de bras (40a), et
le premier organe de bossage (30) comprenant une ouverture disposée radialement pour le passage d'un ensemble de conducteurs de puissance électrique continus (20) depuis l'organe de pivot central (12) jusqu'au premier organe de bras (40) et le deuxième organe de bossage (30a) comprenant une ouverture disposée radialement pour le passage d'un ensemble de conducteurs de puissance électrique continus (20a) depuis l'organe de pivot central (12) jusqu'au deuxième organe de bras (40a).

2. Dispositif d'articulation (10) selon la revendication 1, dans lequel l'organe de pivot central (12) comprend un passage (14, 14a) pour recevoir lesdits au moins deux ensembles de conducteurs de puissance électrique continus (20, 20a) et l'organe de pivot central (12) comprend une portion de séparation (13) pour maintenir les deux ensembles de conducteurs de puissance électrique continus espacés l'un de l'autre.

3. Dispositif d'articulation (10) selon la revendication 2, dans lequel la portion de séparation (13) de l'organe de pivot central (12) est prévue sous forme de formation en bande.

4. Dispositif d'articulation (10) selon l'une quelconque des revendications précédentes, dans lequel le premier organe de bossage (30) est fixe par rapport au premier organe de bras (40) ;
le passage (32, 32a) du premier organe de bossage est aligné coaxialement avec celui du deuxième organe de bossage, et le deuxième organe de bossage (30a) est fixe par rapport au deuxième organe de bras (40a).

5. Dispositif d'articulation (10) selon l'une quelconque des revendications précédentes, dans lequel la portion de montage (15) est prévue pour s'engager avec un pied de support (52, 54, 56, 58).

6. Dispositif d'articulation (10) selon la revendication 5, dans lequel le passage (14, 14a) de l'organe de pivot central (12) s'étend à travers la portion de montage (15).

7. Dispositif d'articulation (10) selon l'une quelconque des revendications précédentes, dans lequel les passages (32, 32a) du premier et du deuxième organe de bossage (30, 30a) sont généralement circulaires et la portion de tourillon (16) a généralement une section transversale circulaire.

8. Dispositif d'articulation (10) selon l'une quelconque des revendications précédentes, dans lequel le premier organe de bossage (30), le deuxième organe de bossage (30a) et l'organe de pivot central (12) sont formés d'un matériau ayant des propriétés d'isolation électrique.

9. Dispositif d'articulation (10) selon l'une quelconque des revendications 1 à 7, dans lequel le premier organe de bossage (30), le deuxième organe de bossage (30a) et l'organe de pivot central (12) sont formés d'un matériau polymère.

10. Dispositif d'articulation (10) selon l'une quelconque des revendications précédentes, dans lequel le premier organe de bossage (30) est formé intégralement avec le premier organe de bras (40) et le deuxième organe de bossage (30a) est formé intégralement avec le deuxième organe de bras (40a).

11. Cadre pliable (39) pour chauffer des vêtements, du linge de lit, des serviettes de bain ou similaire, ledit cadre comprenant :
un premier ensemble de bras (41) comportant une paire de premiers organes de bras généralement allongés (40) supportant une pluralité d'organes allongés (42) pour accrocher des vêtements, etc. ;
un deuxième ensemble de bras (43) comportant une paire de deuxièmes organes de bras généralement allongés (40a) supportant une pluralité d'organes allongés (42) pour accrocher des vêtements, etc. ;
un dispositif d'articulation (10) selon l'une quelconque des revendications 1 à 10, disposé entre des extrémités adjacentes d'au moins l'un des premiers organes de bras (40) et d'au moins l'un des deuxièmes organes de bras (40a) de manière à fournir un mouvement relativement articulé entre le premier ensemble de bras (41) et
le deuxième ensemble de bras (43) et pour fournir de la puissance électrique au premier ensemble de bras par le biais du premier organe de bras adjacent pour fournir de la puissance à un élément chauffant associé au premier ensemble de bras, et
pour fournir de la puissance électrique au deuxième ensemble de bras par le biais du deuxième organe de bras adjacent pour fournir de la puissance à un élément chauffant associé au deuxième ensemble de bras.

12. Cadre pliable (39) selon la revendication 11, dans lequel le premier ensemble de bras (41) et le deuxième ensemble de bras (43) peuvent être déplacés indépendamment l'un par rapport à l'autre d'une configuration non déployée dans laquelle les ensembles de bras s'étendent depuis le dispositif d'articulation (10) dans une direction vers le bas, dans une configuration déployée dans laquelle les ensembles de bras s'étendent dans un plan généralement horizontal.

13. Cadre pliable (39) selon la revendication 11 ou 12, comprenant, en combinaison avec celui-ci, un pied de support (52, 54, 56, 58) pour supporter ledit cadre pliable au niveau du premier organe d'articulation (10) pour permettre un mouvement indépendant du premier ensemble de bras (41) et du deuxième ensemble de bras (43).

14. Cadre pliable et pied de support selon la revendication 13, dans lesquels le pied de support comprend :
une première paire d'organes de supports verticaux (52), dont l'un est en prise avec le premier organe d'articulation (10) ;
un organe d'entretoise supérieur (54) et un organe d'entretoise inférieur (54) s'étendant chacun au-dessus et en dessous du cadre pliable (39) respectivement et entre la première paire d'organes de supports verticaux (52) ;
une deuxième paire d'organes de supports verticaux (56) espacés de manière à permettre un mouvement articulé relatif libre entre le premier ensemble de bras (41) et le deuxième ensemble de bras (43) d'une position abaissée dans une position horizontale déployée ; et
des organes de liaison supérieur et inférieur (58) s'étendant depuis les extrémités supérieure et inférieure de la deuxième paire d'organes de support verticaux et s'engageant de manière articulée avec les organes d'entretoise supérieur et inférieur respectivement, de manière à permettre de déplacer la deuxième paire d'organes de support verticaux en position adjacente à la première paire d'organes de support verticaux lorsque l'au moins un cadre pliable est dans la position abaissée.

15. Cadre pliable et pied de support selon la revendication 14, comprenant en outre un mécanisme d'engagement libérable (57) pour engager les premier et deuxième ensembles de bras (41, 43) avec la deuxième paire d'organes de support verticaux (56).

16. Cadre pliable et pied de support selon la revendication 14 ou la revendication 15, dans lesquels le premier conducteur électrique (20) et le deuxième conducteur électrique (20a) s'étendent à travers au moins un organe de la première paire d'organes de support verticaux (52).
